**Europäisches Patentamt**

(19) **European Patent Office**

**Office européen des brevets**

(11) Publication number: **0 161 713**
**B1**

(12) **EUROPEAN PATENT SPECIFICATION**

(45) Date of publication of patent specification: **20.04.88**

(21) Application number: **85200693.1**

(22) Date of filing: **03.05.85**

(51) Int. Cl.⁴: **B 23 B 51/04, B 23 B 41/00, B 25 B 11/00**

(54) **Drilling apparatus for drilling holes in glass sheets.**

(30) Priority: **04.05.84 NL 8401434**

(43) Date of publication of application:
**21.11.85 Bulletin 85/47**

(45) Publication of the grant of the patent:
**20.04.88 Bulletin 88/16**

(84) Designated Contracting States:
**AT BE CH DE FR GB IT LI LU NL SE**

(56) References cited:
**DE-A-1 461 114**
**FR-A-2 389 761**
**GB-A-1 036 586**
**GB-A-2 032 830**
**US-A-1 729 131**
**US-A-2 124 609**
**US-A-2 906 256**
**US-A-3 690 780**
**US-A-4 101 238**

(73) Proprietor: **CondenSafe B.V.**
**Kerkstraat 378-382**
**NL-1017 JB Amsterdam (NL)**

(72) Inventor: **van Suchtelen, Marco**
**Geerdinkhof 147**
**NL-1103 PV Amsterdam (NL)**
Inventor: **Veenendaal, Jan**
**Geerdinkhof 118**
**NL-1103 PT Amsterdam (NL)**
Inventor: **van Zaanen, Johan Jacob**
**Geerdinkhof 119**
**NL-1103 PT Amsterdam (NL)**

(74) Representative: **de Vries, Johannes Hendrik**
**Fokke et al**
**Octrooibureau Los en Stigter B.V. P.O. Box 20052**
**NL-1000 HB Amsterdam (NL)**

Courier Press, Leamington Spa, England.

## Description

The invention relates to a drilling apparatus for drilling holes in glass sheets, with a housing and a drill spindle being journalled in that housing for an axial to and fro movement, said spindle at least at its free end being hollow and having an internal underpressure during the drilling operation and at its free end being connectable with a hollow drill of which the internal cavity is connected with the internal cavity of the drill spindle and that is lubricated and/or cooled by a fluid being supplied to the drilling apparatus under an overpressure.

A drilling apparatus of this type is already known from US—A—2906256. This known drilling apparatus has a drill spindle that is axially movable to and fro in a static housing and that carries at its end a hollow drill. During a drilling action an external pump is connected with the hollow drill so that the glass sheet is sucked firmly against the edges of the hollow drill and the drilled-out glass sheet part remains in the hollow drill after the hole in the glass sheet has been completed. Moreover, a fluid is supplied through a conduit for lubricating and/or cooling the drill. For this this known apparatus uses an upstanding edge that projects from the surface of the glass sheet to be machined and around the drill.

A disadvantage of this known apparatus according to US—A—2906256 is that it needs a supply conduit for the lubricating and/or cooling fluid as well as a underpressure conduit for creating an underpressure in the hollow drill. Moreover, this known apparatus can only be used for drilling holes in horizontally or nearly horizontally positioned glass sheets. Furthermore, vibrations of the drill spindle relative to the glass sheet can occur during the drilling operation because the fixation of the drill spindle relative to the glass sheet takes place through a drilling frame that has always some flexibility.

It is an object of the invention to provide a drilling apparatus of the type referred to above eliminating these disadvantages in a simple but nevertheless effective way.

Therefore, the drilling apparatus according to the invention is characterized in that the drilling apparatus is provided with means for creating the underpressure in the internal cavity of the drill spindle by means of the supplied fluid.

Because the underpressure in the internal cavity of the drill spindle and therefore in the internal cavity of the hollow drill is generated with the aid of lubricating and/or cooling fluid supplied to the drilling apparatus, it is not any longer necessary to also connect an underpressure conduit with the drilling apparatus in adition to the supply conduit for the fluid. This makes the drilling apparatus according to the invention easier in operation.

Especially when the drilling apparatus is used on places that can be reached difficulty with drilling apparatus that are hard to displace, the drilling apparatus according to the invention is very advantageous. With respect to this especially the drilling of holes in windows of houses is to be considered of, by which the glass sheets to be machined in general are positioned vertically. The drilling apparatus according to the invention will be e r ial 'y n the drilling of holes in do. gl ca ecess ry when special ri la uer t have to be carried out vn... p hi g

In a pre. rred embodiment of the drilling apparatus according to the invention said means comprise a vacuum jet pump that is positioned in a supply conduit of the fluid, the suction side of said pump being connectable with the internal cavity of the drill spindle.

By using a vacuum jet pump an underpressure is created in the internal cavity of the drill spindle in an effective way without the drilling apparatus becoming complicated, heavy or non-operatable. Moreover, the vacuum jet pump has the advantage that an underpressure in the internal cavity of the drill spindle is generated only then when the drilling apparatus is used. It is not necessary to carry out for this a special operation as with the known apparatus. As a result this drilling apparatus according to the invention is very easy in operation.

If in another embodiment of the drilling apparatus according to the invention the drill spindle is axially movable to and fro by the supplied fluid, the safety of the drilling apparatus is still further increased wherein here too in a handy way use is made of the supplied fluid. Then the drilling apparatus can without objections be applied under moist conditions without creating dangerous situations. Especially when working with the drilling apparatus in the open air this is a great advantage.

The invention will hereafter be explained further withy reference to the drawing showing an embodiment of the drilling apparatus according to the invention.

Fig. 1 shows a schematic longitudinal section of a drilling apparatus according to the invention of which the conduits have been omitted for clearness' sake;

Fig. 2 shows a front view of the drilling apparatus 30 of Fig. 1;

Fig. 3 shows a combined cross sectional section of the drilling apparatus of Fig. 1, namely the left half according to line IIIA—IIIA and the right half accroding to line IIIB—IIIB;

Fig. 4 shows a cross sectional section according to line IV—IV in Fig. 1; and

Fig. 5 shows a schematic operational diagram of the drilling apparatus according to the invention.

The drilling apparatus 1 consists substantially of a housing 2 and a drill spindle 3 being journalled in the housing 2 for a to and fro movement. The drill spindle 3 has at its free end an internal cavity 4 being connected with the internal cavity 5 of a hollow drill 6 that can be coupled with the free end of the drill spindle 3.

With the aid of the hollow drill 6 during drilling a hole in the glass sheet a cylindrical glass portion is cut loose relative to the surrounding glass sheet. By applying an underpressure in the cavity 4 of the drill spindle 3 during the drilling operation the cut-loose glass portion will be held in the cavity 5 of the drill 6. Especially when drilling holes in double glass this in an important property because it is undesired that the cut-loose glasss portion falls in the space between the two glass sheets.

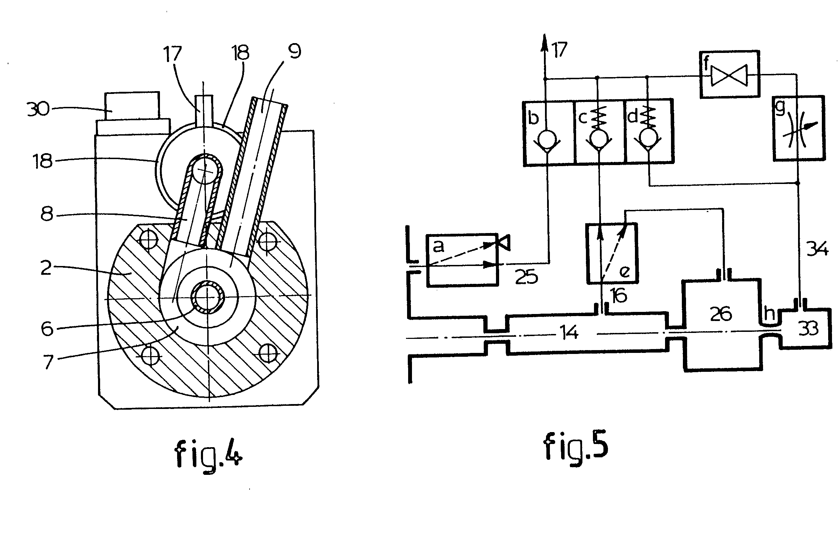

In the chamber 7 that is formed by the housing 2 and that is open at one side a lubricating and/or cooling fluid conduit 8 debouches near to the drill 6. The lubricating and/or cooling fluid supplied through this conduit 8 takes care for the lubrication and/or cooling of the drill 6 during the drilling operation. The discharge of the lubrication and/or cooling fluid takes place through a discharge conduit 9 that is positioned beside the conduit 8 and that is shown in Fig. 4.

Near to its free end the drill spindle 3 is supported by a first bearing 10 wherein the surrounding wall 11 of the drill spindle 3 is axially slidable relative to this bearing. Some distance away from the free end of the drill spindle 3 a sealing element 13 is positioned between its surrounding wall 11 and the internal wall 12 of the chamber 7, said sealing element 13 having a fixed position relative to the chamber 7.

The first bearing 10 as well as the sealing element 13 have good gas and fluid sealing properties. Firstly a result of this is that the lubricating and/or cooling fluid that is led in the chamber through the conduit 8 cannot reach those sections of the chamber 7 that are positioned behind the first bearing 10. Secondly a first chamber section 14 is formed that is totally sealed relative to the other sections of the chamber 7. This makes it possible to apply the underpressure in the cavity 4 of the drill spindle 3 by applying an underpressure in the first chamber section 14 and creating a connection between the first chamber section 14 and the cavity 4 of the drill spindle 3.

Therefore, the drill spindle is provided with two channels 15 debouching in the cavity 4 as well as in the first chamber section 14. The position of the channels 15 such that it is always within the limits of the first chamber section 14 during the axial movement of the drill spindle 3.

It is possible to provide a closable opening in the housing 2, said opening in a certain axial and radial position of the drill spindle 3 being aligned with the channels 15. By applying a locking element that is pushed through the opening into the channels 15 the drill spindle can be locked against a radial rotation easing the mounting or dismounting of a drill 6 on the drill spindle 3.

Besides of the mentioned possibility of applying an underpressure in the first chamber section 14 also an overpressure can be applied in this chamber section 14. In this way a glass portion inside of the cavity 5 of the drill 6 will be expelled.

For applying the under or overpressure in the first chamber section 14 a suction of pressure conduit 16 debouches herein. This suction or pressure conduit 16 can be connected with the suction side 17 of a vacuum pump 18.

This vacuum jet pump 18 is positioned in the conduit 8 of the lubricating and/or cooling fluid that is supplied under pressure to the vacuum jet pump 18. Thus, the lubricating and/or cooling fluid conduit 8 is connected with the fluid discharge side of the vacuum pump 18.

Instead of with the suction side 17 of the vacuum jet pump 18 the suction or pressure conduit 16 can also be connected with the conduit section 19 that is positioned upstream from the vacuum jet pump 18 and that therefore is provided with a coupling stub 20. Due to this an overpressure can be applied in the first chamber section, for example for expelling a glass portion out of the drill 6.

In the suction or pressure conduit 16 a not further shown three way valve is provided for at choice connecting the first chamber section 14 with the suction side 17 of the vacuum jet pump 18 or with the conduit section 19. Moreover, between the three way valve and the vacuum jet pump 18 there is provided a vacuum limiter for limiting the underpressure in the first chamber section 14.

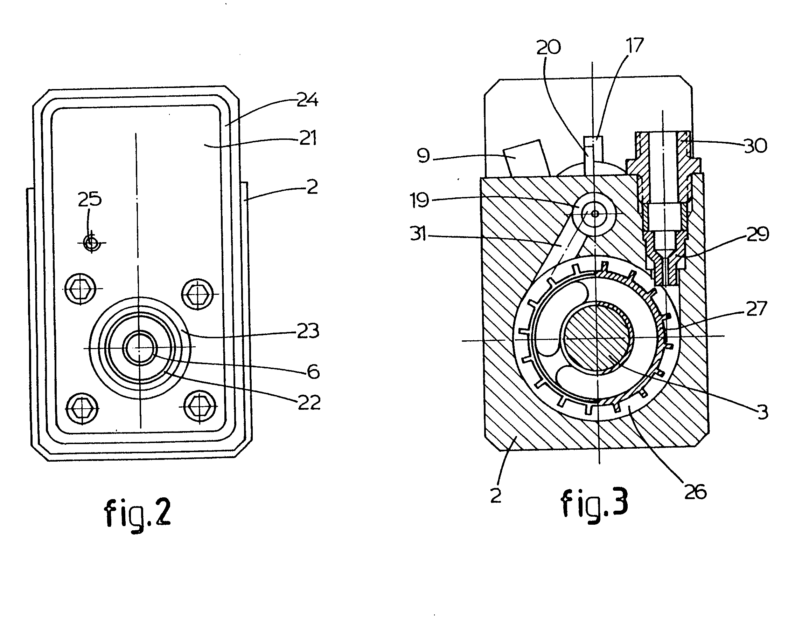

At its front the drilling apparatus 1 is provided with a suction device for sucking the drilling apparatus 1 on the glass sheet. This suction device exists of a flat plane 21 that has to be placed against the glass sheet to be machined and that surrounds the opening 22 of the chamber 7, as appears clearly from Fig. 2. The flat plane 21 is limited by two endless sealing means 23, 24 extending around the opening 22 of the chamber 7 and near to the outer edge of the flat plane 21, respectively. A suction channel 25 debouches in that portion of the flat plane that is positioned between these sealing means 23, 24. This suction channel 25 can be connected with the suction side 17 of the vacuum jet pump 18 so that it is possible to firmly lock the drilling apparatus 1 relative to the glass sheet to be machined. Because the opening 22 of the chamber 7 is not connected with the suction channel 25 when the drilling apparatus 1 is locked on a glass sheet, the locking will also be maintained after finishing the hole.

In the suction channel 25 a not further shown repercussion valve is provided that takes care for maintaining the underpressure at the flat plane 21. In the suction channel 25 also an adjustable vacuum interrupter has been placed for interrupting the underpressure when the drilling apparatus 1 has to be removed from the glass sheet.

The chamber 7 has a second chamber 26 that is formed at that side of the sealing element 13 that faces away from the opening 22. The drill spindle portion extending in the second chamber section 26 carries a paddle wheel 27 that is radially and axially not slidable connected therewith. In an opening 28 in the wall of the second chamber section 26 a spray-nozzle 29 (see Fig. 3) is provided that debouches in the second chamber section 26 in such a way, that the elongation of the axis of the spray-nozzle 29 nearly touches the contour of the paddle wheel 27. As a result a good functioning turbine drive of the drill spindle 3 is obtained.

The width of the paddle wheel 27 is such that during the to and fro movement of the drill spindle 3 the spray-nozzle 29 is always positioned between the forward and backward limiting plane of the paddle wheel 27.

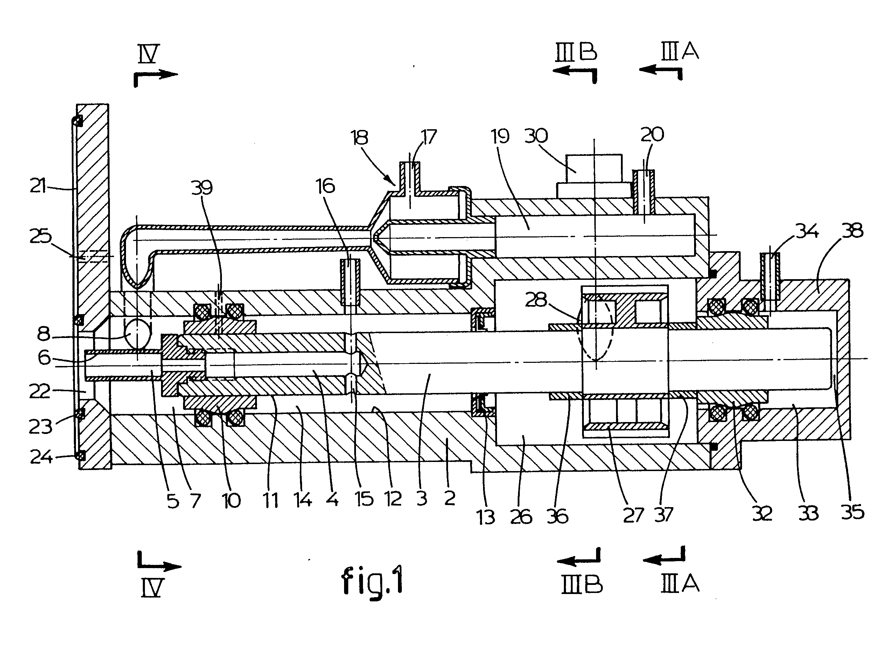

The spray-nozzle 29 can be connected with an external supply conduit of the high pressurized fluid by means of a coupling element 30. Besides of the opening 28 for the spray-nozzle 29 the second chamber section 26 also comprises two openings for discharge channels 31. These discharge channels 31 that are not positioned in the same cross sectional plane as the spray-nozzle 29 but that in Fig. 1 are positioned equidistantly at both sides of the spray-nozzle 29 form a connection between the second chamber section 26 and the conduit section 19. As a consequence the pressure with which the fluid is supplied to the spray-nozzle 29 has to be that high that after driving the drill spindle 3 through paddle wheel 27 the fluid flowing through the discharge channels 31 via the conduit section 19 through the vacuum jet pump 18 has still enough velocity to create an underpressure at the suction side 17 of the vacuum jet pump 18.

Besides of the driving function the fluid whirling in the second chamber section 26 before being discharged through the discharge channels 31 also has a damping effect on the radial drill spindle movement thereby avoiding extremely high revolutions.

At that side of the paddle wheel 27 facing away from the opening 22 of the chamber 7 the drill spindle 3 is journalled by a second bearing 32. This second bearing 32, in contrary to the first bearing 10, is penetratable by the fluid wherein the contour wall 11 of the drill spindle 3 is axially slidable relative to the second bearing 32.

In the third chamber section 33 that is limited by the second bearing 32 and the backside of the chamber 7 a conduit 34 debouches that can be connected with the suction side 17 of the vacuum jet pump 18. In this conduit a not further shown pressure sensitive valve is positioned that is closed during the drilling operation and that is opened after completing the drilling operation wherein also in the conduit 34 a pressure limiter is provided limiting the maximum pressure in the third chamber section 33. Moreover, the conduit 34 contains a passage control that can be used to control the flow velocity after opening the valve.

Because the second bearing can be penetrated by the fluid a part of the fluid being sprayed under high pressure in the second chamber section 26 through the spray-nozzle 29 will penetrate through the second bearing 32 into the third chamber section 33 and pressurize the backside 35 of the drill spindle 3. This pressure on the backside 35 of the drill spindle 3 will result in an axial movement of the drill spindle 3 (in Fig. 1 to the left).

The pressure rise in the third chamber section 33 that is possible because the pressure sensitive valve in the conduit 34 being closed will occur gradually so that the movement of the drill spindle starts gradually and has to sudden character.

When the drilling operation has been completed and the hole in the glass sheet has been wholly formed the drill spindle will have some overshoot due to the pressure in the third chamber section 33 and the fall-off of the opposite pressure of the glass sheet on the drill spindle 3 and the inertia of the drill spindle 3 will cause an underpressure in the third chamber section 33. The pressure sensitive valve reacts on this pressure fall and will open thereby connecting the third chamber section 33 with the suction side 17 of the vacuum jet pump 18. As a result the drill spindle will be moved in the opposite direction (in Fig. 1 to the right). The velocity of this movement depends on the position of the passage control positioned in the conduit 34.

The advantage of using such a pressure sensitive valve is, that the drill spindle 3 is moved back nearly instantly after completing the hole in the glass sheet without the need for a futher operation.

At both sides of the paddle wheel 27 two abutment means 36, 37 are provided on the drill spindle 3, said means cooperating with the sealing element 13 and the second bearing 32, respectively, for limiting the axial movement of the drill spindle 3.

The part 38 of the housing 2 has been manufactured from a transparent material so that it is possible to follow the axial movement of the drill spindle 3 showing the moment on which a hole is completed.

The first bearing 10 is provided with a lubrication conduit 39 that debouches near to the bearing 10. This lubrication conduit 39 is connected with the second chamber section 26.

The operation of the drilling apparatus 1 will be explained hereafter with reference to the operational diagram of Fig. 5.

During sucking of the drilling apparatus 1 on a glass sheet the vacuum disrupter a is closed so that the drilling apparatus 1 is locked firmly against the glass sheet. The repercussion valve b hereby maintains the underpressure in the suction channel 25. The pressure sensitive valve f is opened too so that the drill spindle 3 is in its withdrawn (in Fig. 1 at the far right) position. Finally the three way valve e is in such a position that the first chamber section 14 is connected with the vacuum limiter c. When the underpressure in the suction channel 25 and the conduit 34 exceeds a set limit the vacuum limiter c will open and the first chamber section 14 and the cavity 4 of the drill spindle will be evacuated by the vacuum jet pump 18.

When the pressure sensitive valve f is closed now, in the third chamber section 33 an overpressure will be built up through the bearing slit h at the second bearing 32 so that the drill spindle 3 will move axially (in Fig. 1 to the left). The maximum pressure in the third chamber section 33 is limited by the pressure limiter d that is positioned in the conduit 34.

During the drilling operation any drilling waste will be sucked away through the hollow drill 6 via the cavity of the drill spindle. Via this way also a part of the lubricating and/or cooling fluid will be removed.

When the hole has been wholly formed the pressure sensitive valve f will open due to the sudden pressure fall in the third chamber section 33 and the drill spindle 3 will be moved back towards its starting position. The velocity with which this occurs depends on the setting of the passage control 9. During this backward axial movement any parts of the glass portion projecting out of the radial limits of the hollow drill 6 will be moved out of the drilled hole.

Next the vacuum disrupter 1 will be opened that long until the drilling apparatus 1 can be taken away from the glass sheet.

Finally the three way valve e can be set in its second position so that the first chamber section 14 is connected with the pressurized second chamber section 26. As a result the glass portion will be pressed out of the hollow drill 6 whereafter the drilling apparatus 1 is ready again for a following drilling operation.

The invention is not limited to the embodiment described above but can be varied widely within the scope of the invention.

**Claims**

1. Drilling apparatus for drilling holes in glass sheets, with a housing (2) and a drill spindle (3) being journalled in that housing (2) for an axial to and fro movement, said spindle (3) at least at its free end being hollow and having an internal underpressure during the drilling operation and at its free end being connectable with a hollow drill (6) of which the internal cavity (5) is connected with the internal cavity (4) of the drill spindle (3) and that is lubricated and/or cooled by a fluid being supplied to the drilling apparatus under an overpressure, characterised in that the drilling apparatus is provided with means (18) for creating the underpressure in the internal cavity (4) of the drill spindle (3) by means of the supplied fluid.

2. Drilling apparatus according to claim 1, characterized in that said means comprise a vacuum jet pump (18) that is positioned in the supply conduit of the fluid, the suction side (17) of said pump (18) being connectable with the internal cavity (4) of the drill spindle (3).

3. Drilling apparatus according to claim 2, characterized in that the drill spindle (3) is positioned in a chamber (7) that is formed in the housing (2) and that is open at one side and that near to its free end is supported by a first bearing (10) having good gas and fluid sealing properties wherein, on some distance of its free end, a sealing element (13) is positioned between its contour wall (11) and the internal wall (12) of the chamber (7) and wherein the drill spindle (3) is provided with at least one channel (15) connecting the internal cavity (4) of the drill spindle (3) with the first chamber section (14) that is limited by the first bearing (10) and the sealing element (13) and that by means of a conduit (16) can be connected with the suction side (17) of the vacuum jet pump (18).

4. Drilling apparatus according to claim 3 characterized in that for the lubrication and/or cooling of the hollow drill (6) the chamber section being placed at that side of the first bearing (10) that faces towards the opening (22) of the chamber (7) is provided with a supply (8) and discharge conduit (9) for the supplied fluid wherein the supply side (8) is connected with the pressure side of the vacuum jet pump (18).

5. Drilling apparatus according to one of the claims 2—4, characterized in that it is provided with a suction device (21, 23, 24, 25) for firmly sucking the drilling apparatus on the glass sheet, said device (21, 23, 24, 25) being connectable with the vacuum jet pump (18).

6. Drilling apparatus according to claim 5, characterized in that the suction device comprises a flat plane (21) that has to be placed against the glass sheet to be machined and that extends around the opening (22) of the chamber (7) and that is provided with at least two endless sealing means (23, 24) of which one sealing means (23) surrounds the opening (22) and of which the other sealing means (24) extends near to the outer edge of the flat plane (21) and further comprising a suction channel (25) debouching in this flat plane (21) and being connectable with the suction side (17) of the vacuum jet pump (18).

7. Drilling apparatus according to claim 6, characterized in that in the suction channel (25) a repercussion valve (b) is positioned for maintaining the underpressure as well as an adjustable vacuum disrupter for compensating this underpressure.

8. Drilling apparatus according to one of the claims 1—7, characterized in that this is provided with means for internally pressurizing the internal cavity (4) of the drill spindle (3).

9. Drilling apparatus according to claim 8, characterized in that said means comprise a connecting conduit between the conduit (16) that debouches in the first chamber section (14) and the supply of the pressurized fluid.

10. Drilling apparatus according to claim 9, characterized in that a three way valve (e) is positioned in the conduit (16) that debouches in the first chamber section (14) for selectively connecting the first chamber section (14) with the suction side (17) of the vacuum jet pump (18) or with the connecting conduit, wherein for limiting the underpressure in the first chamber section (14) a vacuum limiter (c) is positioned between the three way valve (e) and the vacuum jet pump (18).

11. Drilling apparatus according to one of the claims 3—10, characterized in that the first bearing (10) is provided with a supply conduit (39) for the fluid that functions as a lubricating fluid for said bearing (10).

**Patentansprüche**

1. Bohrvorrichtung zum Bohren von Löchern in Glasscheiben, mit einem Gehäuse (2) und einer in diesem für axiale Hin- und Herbewegung gelagerten Bohrspindel (3), die wenigstens an ihrem freien Ende hohl ist, während des Bohrvorganges innen unter Unterdruck steht und an ihrem freien Ende mit hohlen Bohrer (6) verbindbar ist, dessen innerer Hohlraum (5) mit dem inneren Hohlraum (4) der Bohrspindel (3) verbunden ist und der mit einer Flüssigkeit, welche unter einem Überdruck der Bohrvorrichtung zugeführt wird, geschmiert und/oder gekühlt wird, dadurch gekennzeichnet, daß die Bohrvorrichtung mit einer Einrichtung (18) zum Erzeugen des Unterdrucks in dem inneren Hohlraum (4) der Bohrspindel (3) mittels der zugeführten Flüssigkeit versehen ist.

2. Bohrvorrichtung nach Anspruch 1, dadurch gekennzeichnet, daß die Einrichtung eine Unterdruckstrahlpumpe (18) aufweist, die in der Zuführleitung der Flüssigkeit angeordnet ist und deren Ansaugseite (17) mit dem inneren Hohlraum (4) der Bohrspindel (3) verbinder ist.

3. Bohrvorrichtung nach Anspruch 2, dadurch gekennzeichnet, daß die Bohrspindel (3) in einer Kammer (7) angeordnet ist, in dem Gehäuse (2) ausgebildet ist und die an einer seite offen ist, und nahe ihres freien Endes an einem ersten Lager (10) mit guten Gas- und Flüssigkeitsabdichtungseigenschaften abgestützt ist, wobei im Abstand von ihrem freien Ende ein Abdichtungselement (13) zwischen ihrer Umfangswand (11) und der Innenwand (12) der Kammer (7) angeordnet ist und wobei die Bohrspindel (3) mit wenigstens einem Kanal (15) versehen ist, der den inneren Hohlraum (4) der Bohrspindel (3) mit dem ersten Kammerabschnitt (14) verbindet, der von dem ersten Lager (10) und dem Abdichtungselement (13) begrenzt ist und der mittels einer Leitung (16) mit der Ansaugseite (17) der Unterdruckstrahlpumpe (18) verbunden werden kann.

4. Bohrvorrichtung nach Anspruch 3, dadurch gekennzeichnet, daß zum Schmieren und/oder Kühlen des hohlen Bohrers (6) der Kammerabschnitt, weicher an derjenigen Seite des ersten Lagers (10) angeordnet ist, welcher der Öffnung (22) der Kammer (7) zugewandt ist, mit einer Zuführ- (8) und Abführleitung (9) für die zugeführte Flüssigkeit versehen ist, wobei die Zuführseite (8) mit der Druckseite der Unterdruckstrahlpumpe (18) verbunden ist.

5. Bohrvorrichtung nach einem der Ansprüche 2 bis 4, dadurch gekennzeichnet, daß sie mit einer Saugvorrichtung (21, 23, 24, 25) zum festen Ansaugen der Bohrvorrichtung gegen die Glasscheibe versehen ist, wobei die Saugvorrichtung (21, 23, 24, 25) mit der Unterdruckstrahlpumpe (18) verbinder ist.

6. Bohrvorrichtung nach Anspruch 5, dadurch gekennzeichnet, daß die Saugvorrichtung zum Ansetzen gegen die zu bearbeitende Glasscheibe eine ebene Fläche (21) enthält, die sich rings der Öffnung (22) der Kammer (7) erstreckt und mit wenigstens zwei endlosen Dichtungen (23, 24) versehen ist, von welchen die eine Dichtung (23) die Öffnung (22) umgibt und die andere Dichtung (24) nahe des Außenrandes der ebenen Fläche (21) angeordnet ist, und daß ein Saugkanal (25) an dieser ebenen Fläche (21) mündet und mit der Ansaugseite (17) der Unterdruckstrahlpumpe (18) verbinder ist.

7. Bohrvorrichtung nach Anspruch 6, dadurch gekennzeichnet, daß in dem Saugkanal (25) ein Rückdruckventil (b) zum Aufrechterhalten des unterdrucks wie auch ein einstellbarer Unterdruckunterbrecher zum Kompensieren dieses Unterdrucks angeordnet sind.

8. Bohrvorrichtung nach einem der Ansprüche 1 bis 7, dadurch gekennzeichnet, daß sie mit einer Einrichtung zur Druckbeaufschlagung des inneren Hohlraumes (4) der Bohrspindel (3) versehen ist.

9. Bohrvorrichtung nach Anspruch 8, dadurch gekennzeichnet, daß die Einrichtung eine Verbindungsleitung zwischen der in den ersten Kammerabschnitt (14) mündenden Leitung (16) und der Zuführleitung der unter Druck stehenden Flüssigkeit enthält.

10. Bohrvorrichtung nach Anspruch 9, dadurch gekennzeichnet, dab ein Dreiwegventil (e) in der in den ersten Kammerabschnitt (14) mündenden Leitung (16) zum selektiven Verbinden des ersten Kammerabschnitts (14) mit der Ansaugseite (17) der Unterdruckstrahlpumpe (18) oder mit der Verbindungsleitung angeordnet ist, wobei zur Begrenzung des Unterdrucks in dem ersten Kammerabschnitt (14) ein Unterdruckbegrenzer (c) zwischen dem Dreiwegventil (e) und der Unterdruckstrahlpumpe (18) angeordnet ist.

11. Bohrvorrichtung nach einem der Ansprüche 3 bis 10, dadurch gekennzeichnet, daß das erste Lager (10) mit einer Zuführleitung (39) für die Flüssigkeit versehen ist, welche als Schmierflüssigkeit für das Lager (10) wirkt.

**Revendications**

1. Appareil de perçage de trous dans des plaques de verre, comportant un corps (2) et une broche (3) de perçage qui tourillonne dans le corps (2) pour un mouvement axial de va-et-vient, ladite broche (3) étant creuse, au moins à son extrémité libre, et présentant une dépression interne pendant l'opération de perçage, et pouvant être reliée, par son extrémite libre, à une mèche creuse (6) dont la cavité intérieure (5) est raccordée à la cavité intérieure (5) est raccordée à la cavité intérieure (4) de la broche de perçage (3) et qui est lubrifiée et/ou refroidie par un fluide fournie sous une surpression à l'appareil de perçage caractérisé en ce que l'appareil de perçage comporte des moyens (18) destinés à engendrer la dépression dans la cavité intérieure (4) de la broche (3) de perçage au moyen du fluide fourni.

2. Appareil de perçage selon la revendication 1, caractérise en ce que lesdits moyens comprennent une pompe à vide à éjecteur (18) qui est disposée dans le conduit d'alimentation en fluide, le côté d'aspiration (17) de ladite pompe (18) pouvant être raccordé à la cavité intérieure (4) de la broche de perçage (3).

3. Appareil de perçage selon la revendication 2, caractérisé en ce que la broche de perçage (3) est disposée dans une chambre (7) qui est formée dans le corps (2) et qui est ouverte à un premier côté, et est supporté, à proximité de son extrémité libre, par un premier palier (10) possédant de bonnes propriétés d'étanchéité aux gaz et aux fluides, un élément (13) d'étanchéité étant place, à une certaine distance de l'extrémité libre de la broche de perçage, entre la paroi périphérique (11) de celle-ci et la paroi intérieure (12) de la chambre (7), la broche (3) de perçage présentant au moins un canal (15) raccordant la cavité intérieure (4) de la broche (3) de perçage à la première partie (14) de la chambre qui est limitée par le premier palier (10) et par l'élément d'étanchéité (13) et qui, au moyen d'un conduit (16), peut être mise en communication avec le côté d'aspiration (17) de la pompe à vide à éjecteur (18).

4. Appareil de perçage selon la revendication 3, caractérisé en ce que, pour la lubrification et/ou le refroidissement de la mèche creuse (6), la partie de la chambre placée du côté du premier palier (10) qui est tourné vers l'ouverture (22) de la chambre (7), présente une alimentation (8) et un conduit (9) de décharge pour le fluide d'alimentation, le côté (8) d'alimentation étant raccordé au côté de pression de la pompe à vide à éjecteur (18).

5. Appareil de perçage selon l'une quelconque des revendications 2-4, caractérise en ce qu'il comporte un dispositif de succion (21, 23, 24, 25) destiné à applequer fermement par succion l'appareil de perçage sur la plaque de verre, ledit dispositif (21, 23, 24, 25) pouvant être raccordé à la pompe à vide à éjecteur (18).

6. Appareil de perçage selon la revendication 5, caractérisé en ce que le dispositif de succion comprend un plan plat (21) qui doit être placé contre la plaque de verre à usiner et qui s'étend autour de l'ouverture (22) de la chambre (7) et qui est muni d'au moins deux moyens fermés (23, 24) d'étanchéité, au moins un moyen (23) d'étanchéité s'étendant jusqu'à un point proche du bord extérieur du plan plat (21), et comprenant en outre un canal (25) de succion débouchant dans ce plan plat (21) et pouvant être raccordé au côté (17) d'aspiration de la pompe à vide à éjecteur (18).

7. Appareil de perçage selon la revendication 6, caractérisé en ce que sont positionnés dans le canal de succion (25) un clapet anti-retour (b) destiné à maintenir la dépression, ainsi qu'un cassevide réglable destiné à compenser cette dépression.

8. Appareil de perçage selon l'une des revendications 1-7, caractérisé en ce qu'il comporte des moyens destinés à mettre sous pression interne la cavité intérieure (4) de la broche (3) de perçage.

9. Appareil de perçage selon la revendication 8, caractérisé en ce que lesdits moyens comprennent un conduit de raccordement entre le conduit (16) qui débouche dans la première partie (14) de la chambre et l'alimentation en fluide sous pression.

10. Appareil de perçage selon la revendication 9, caractérisé en ce qu'une valve (e) à trois voices est placée dans le conduit (16) qui débouche dans la première partie (14) de la chambre pour raccorder sélectivement la première partie (14) de la chambre au côté d'aspiration (17) de la pompe à vide à éjecteur (18) ou au conduit de raccordement, un limiteur (c) de vide étant disposé entre la valve (e) à trois voies et la pompe à vide à éjecteur (18) pour limiter la dépression dans la première partie (14) de la chambre.

11. Appareil de perçage selon l'une des revendications 3-10, caractérisé en ce que le premier palier (10) comporte un conduit (39) pour l'alimentation en fluide assumant la fonction de fluide lubrifiant pour ledit palier (10).

fig.1

fig.3

fig.2

fig.4

fig.5